# EUROPEAN PATENT SPECIFICATION

(11) **EP 1 960 683 B1**
(45) Date of publication and mention of the grant of the patent: **05.05.2010**
(21) Application number: 06813038.4
(22) Date of filing: 24.11.2006
(51) Int. Cl.: F16D 65/14, F16D 55/2255

(54) **A SERVICE DISC BRAKE FOR A HEAVY VEHICLE**
BETRIEBSSCHEIBENBREMSE FÜR SCHWERFAHRZEUG
FREIN A DISQUE DE SERVICE POUR UN VEHICULE POIDS-LOURD

(30) Priority: 08.12.2005 SE 0502719
(43) Date of publication of application: 27.08.2008
(73) Proprietor: Volvo Lastvagnar AB, 405 08 Göteborg (SE)
(72) Inventor: JOHANSSON, Owe, S-430 20 Veddige (SE)
(74) Representative: Fröhling, Werner Otto
(86) International application number: PCT/SE2006/001333
(87) International publication number: WO 2007/067119

(56) References cited:
- WO-A-01/36837
- US-A- 3 435 922
- US-A- 3 498 421

## Description

### TECHNICAL FIELD

The invention relates to a service disc brake for a heavy vehicle according to the preamble of claim 1.

The invention is applicable on different type of vehicles. Although the invention is primarily described in connection with trucks, the service disc brake according to the invention can also be used for example in other heavy vehicles such as buses, wheel loaders, articulated haulers, and excavators.

### BACKGROUND OF THE INVENTION

In service disc brakes for trucks which brakes have a brake disc and inner and outer brake pads, an even clamp force distribution on the inner and outer pads and a running clearance between the pads and the brake disc are desired. In order to avoid the pads from dragging and leaning against the brake disc there must be a certain axial clearance between the pads and the brake disc when the brake force is removed and the brake disc is not to be braked. Furthermore, the running clearance must be present on the both sides of the brake disc. In trucks, the service disc brake can have a fixed brake caliper and the brake force can be created on one side of the brake disc. Thus, such a service disc brake needs some arrangement for distributing the forces evenly on both the inner and outer pads and for ensuring the running clearance to be present.

According to prior art, service disc brakes having a fixed brake caliper can be designed with either a sliding brake disc or a bending brake disc so as to obtain a even clamp force distribution and the requisite running clearance between the brake pads and the brake disc. However, both a bending disc and a sliding disc have large disadvantages. A bending disc involves undesired internal stress in the brake disc and in other brake components connected thereto. This in turn can cause damage to the brake. A sliding disc results in a more complicated brake design and is further less reliable due to potential jamming caused by corrosion or dirt. Furthermore, there is a risk a rattling noise arises in the brake. The noise is caused by the requisite radial play between the brake disc and the component arranged to support the brake disc. Wear or inadequate dimensional tolerance distribution of the brake disc and the support component can increase the rattling noise.

### SUMMARY OF THE INVENTION

An object of the invention is to provide a service disc brake of the kind referred to in the introduction where at least some of the problems of such prior art devices discussed above is reduced to a substantial extent.

The object is achieved by a service brake according to claim 1.

By the provision of a third piston and the closed space containing a hydraulic fluid, which space connects the second and third pistons, both first and second pistons can be displaced and, thus, both first and second pads can be brought into contact with the brake disc without the need of displacing or bending the brake disc. When applying a brake force on the first pad by means of the braking actuator, a counterforce is created on the third piston which force is transmitted to the second piston by means of the hydraulic fluid and further to the second pad and the brake disc. Hence, during braking, the clamp force can be evenly distributed on the pads arranged on different sides of the brake disc. Once the brake force is removed the first and second pads will centre equally relative to the brake disc with substantially the same running clearance on both sides of the brake disc between the brake disc and the first and second brake pads.

The service disc brake according to the invention is also very suitable to be provided with means for adjusting the running clearances so as to compensate for wear of the pads. The invention enables the disc brake to be designed for adjustment of the axial clearance on both sides of the brake disc by operation of one adjustment means only.

The invention relates also to a vehicle comprising a service disc brake according to the invention.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 is a schematic illustration of a disc brake according to the invention, and
Fig. 2 is a schematic illustration of a variant of the disc brake in figure 1.

### DETAILED DESCRIPTION OF PREFERRED EMBODIMENTS OF THE INVENTION

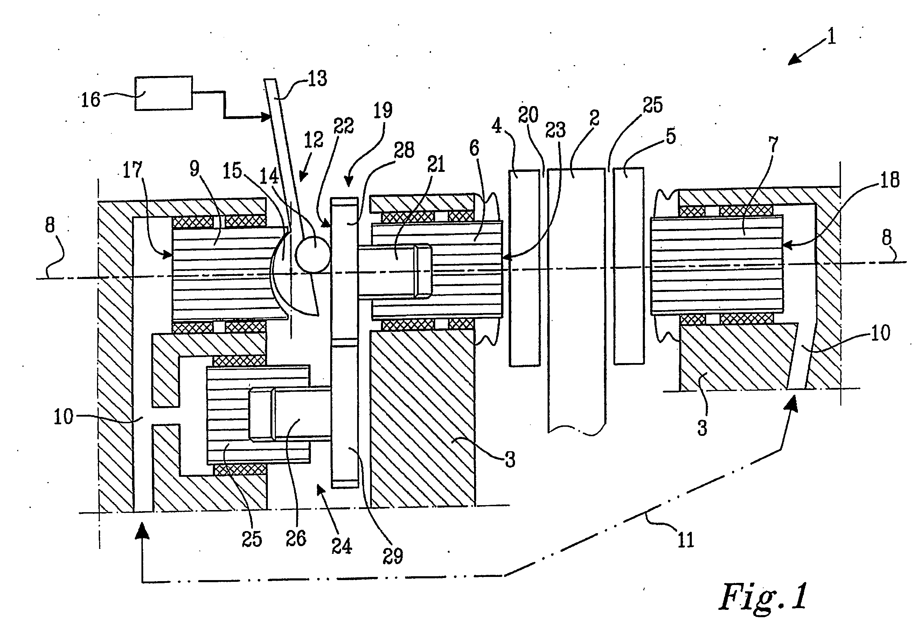

In figure 1 a service disc brake 1 according to the invention is illustrated. Such a service brake is used for retardation of a vehicle during normal operation of the vehicle, i.e. during driving of the vehicle. By use of the service brake the velocity of the vehicle can be decreased. The service brake is preferably arranged at one or more wheels of the vehicle to brake the wheels. The service disc brake 1 comprises a brake disc 2 which is arranged for rotational motion relative to a brake caliper 3 provided with a first brake pad 4 and a second brake pad 5. The first and second brake pads are 4, 5 arranged on opposite sides of the brake disc to be brought into contact with the brake disc and thus brake the rotational motion of the disc. A first displaceable piston 6 and a second displaceable piston 7 are arranged in the caliper 3 to act on the first brake pad 4 and the second brake pad 5, respectively, so as to bring the pads 4, 5 into contact with the brake disc 2 and transmit the requisite brake force. Each piston 6, 7 is displaceable to and fro in the axial direction along a geometrical line 8, and preferably the first and second pistons 6, 7 are displaceable along the same geometrical line 8. Certainly, two or more of the first and second pistons could be used on each side of the brake disc.

The service disc brake 1 further comprises a third displaceable piston 9. The third piston 9 is suitably arranged, for example in the caliper 3, for displacement motions to and fro in the axial direction along for example the same geometrical line 8 as the first piston 6. In accordance with the invention the second piston 7 and the third piston 9 are connected to each other via a closed space 10 containing a hydraulic fluid. The term hydraulic fluid is meant to comprise different liquid state fluids. The hydraulic fluid is preferably any hydraulic oil, silicon oil or any other suitable high temperature oil. The closed space 10 can be constituted by a hydraulic line 11 arranged inside the brake structure or as a piping 11 arranged outside the brake structure. Due to the risk for heating the hydraulic fluid, the closed space 10 is preferably arranged in a well ventilated part of the brake 1. A heat shield (not illustrated) may be required to protect the fluid to be heated by hot brake components or other adjacent components.

In the embodiment illustrated in figure 1, an actuator 12 for braking the brake disc is arranged between the first piston 6 and the third piston 9. The braking actuator 12 is arranged to act on the first piston 6 and the third piston 9 for displacement of the first piston 6 towards the brake disc 2 and for displacement of the third piston 9 in the opposite direction, so as to displace the second piston 7 towards the brake disc 2 by means of the hydraulic fluid in the closed space 10.

The braking actuator 12 may comprise a pivotable lever 13 arranged between the first piston 6 and the third 9 piston. The lever 13 may have a first portion 14 for creating a force on the first piston 6 and a second portion 15 for creating a corresponding counterforce on the third piston 9 during pivot motion of the lever 13. The lever 13 can be actuated for example by an air cylinder 16 or an electric motor. The force applied on the first piston 6 generates an equally sized counterforce on the third piston 9. In an alternative embodiment the requisite force can be transmitted from a motor or an air cylinder to the pistons 6, 9 by means of another equipment, such as a wedge or similar, instead of using the lever 13.

Since the pressure of the hydraulic fluid is the same throughout the fluid in the closed space 10 the size of the force on the second piston 7 can be the same as on the first 6 and third 9 pistons provided that the same size of the end surface exposed to the hydraulic fluid is chosen for the second and third pistons. In the embodiment illustrated in figure 1 the size of the end surface 17 of the third piston 9 is substantially equal to the size of the end surface 18 of the second piston 7. In another embodiment, the end surfaces 17, 18 can be slightly different for fine adjustment of the brake.

The service disc brake 1 comprises a first means 19 for adjusting a first axial clearance 20 between the brake disc 2 and the first pad 4. The first adjustment means 19 preferably comprise a screw mechanism 21 arranged on the first piston 6. By such a screw mechanism 21 the position of the first piston 6 relative to the brake disc 2 can be adjusted so as to compensate for wear of the first pad 4 and thereby keep the running clearance 20 substantially unchanged. By adjusting the position of the screw 21 relative to the piston 6, the distance from the rear surface 22 cooperating with the first portion 14 of the lever 13 to the front surface 23 of the piston 6, i.e. the total length of the piston 6, can be varied.

The disc brake 1 comprises also a second means 24 for adjusting a second axial clearance 25 between the brake disc 2 and the second pad 5 by adjusting the position of the second piston 7 relative to the brake disc 2. According to the embodiment illustrated in figure 1, the second adjustment means 24 comprises a fourth displaceable piston 25 which is connected to the second 7 and third 9 pistons via the closed space 10 containing the hydraulic fluid. The second adjustment means 24 further comprises a member 26, such as a screw mechanism arranged on the fourth piston 25, for adjusting the position of the second piston 7 by adjusting the position of the fourth piston 25 relative to the closed space 10. Thus, the position of the second piston 7 can be adjusted so as to compensate for wear of the second pad 5 and thereby keep the running clearance 25 substantially unchanged.

Each of the first and second pistons 6, 7 can be designed with a total compensation displacement length for example in the size of 20 mm, and the stroke length (axial clearance) can be in the size of 2 mm.

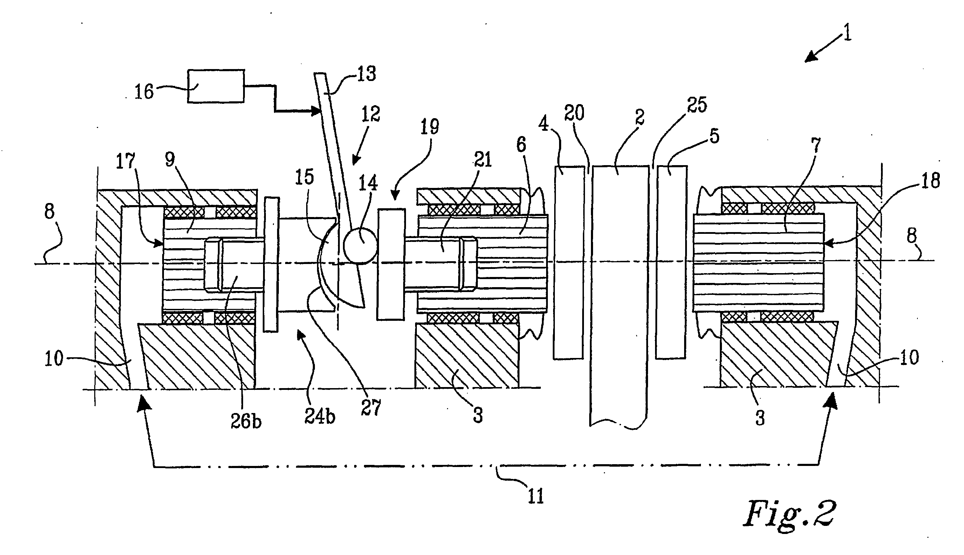

According to the embodiment illustrated in figure 2, the fourth piston is not needed and instead the second adjustment means 24b comprises a member 26b, such as a screw mechanism arranged on the third piston 9, for adjusting the position of the second piston 7 by adjusting the position of the third piston 9 relative to the closed space 10. In this embodiment the adjusting member 26b is provided with a counter portion 27 of the third piston 9, which counter portion 27 cooperates with the second portion 15 of the lever 13.

In all embodiments mentioned above the first adjustment means 19 and the second adjustment means 24, 24b can be coupled to each other in order to automatically adjust the second axial clearance 25 at the same time as the first axial clearance 20 is adjusted or vice versa. This is illustrated in figure 1 where the screw mechanism arranged on the first piston 6 has a first gear wheel 28 connected to a second gear wheel 29 of the screw mechanism arranged 26 on the fourth piston 25. This implies that if the first gear wheel 28 (viewed in a direction from the third piston towards the first piston) is rotated counter clockwise, the second gear wheel 29 (viewed in the opposite direction) is also rotated counter clockwise. Thus, both the first piston 6 and the second piston 7 will be displaced towards the brake disc 2.

The adjustment of the running clearance 20, 25 can be automatically or manually performed with the use of a further mechanical device and/or electrical device (not illustrated) for activation of the first adjustment means 19 and/or the second adjustment means 24, 24b. For automatic adjustment of the running clearance any kind of pad wear sensing equipment is preferably used together with the adjustment means described herein.

All pistons have to be supported and guided, and the pistons which are in connection with the hydraulic fluid of the closed space 10 have to be sealed off against the ambient environment.

It is to be understood that the present invention is not limited to the embodiments described above and illustrated in the drawings; rather, the skilled person will recognize that many changes and modifications may be made within the scope of the appended claims.

## Claims

1. A service disc brake (1) for a heavy vehicle, comprising a brake disc (2), a first brake pad (4) and a second brake pad (5) arranged on opposite sides of the brake disc (2), and a first displaceable piston (6) and a second displaceable piston (7) which are arranged to act on the first brake pad (4) and the second brake pad (5), respectively, and an actuator (12) for braking the brake disc (2), **characterized in that** the disc brake comprises a third displaceable piston (9), the second piston (7) and the third piston (9) being connected to each other via a closed space (10) containing a hydraulic fluid, the braking actuator (12) being arranged to act on the first piston (6) whereby a counterforce is created on the third piston (9) for displacement of the first piston (6) towards the brake disc (2) and for displacement of the third piston (9) in the opposite direction so as to displace the second piston (7) towards the brake disc (2) by means of the hydraulic fluid in the closed space (10).

2. A service disc brake according to claim 1, **characterized in that** the disc brake (1) comprises a first means (19) for adjusting a first axial clearance (20) between the brake disc (2) and the first pad (4) by adjusting the position of the first piston (6) relative to the brake disc (2).

3. A service disc brake according to claim 2, **characterized in that** the first adjustment means (19) comprises a screw mechanism (21) arranged on the first piston (6).

4. A service disc brake according to any preceding claim, **characterized in that** the disc brake (1) comprises a second means (24, 24b) for adjusting a second axial clearance (25) between the brake disc (2) and the second pad (5) by adjusting the position of the second piston (7) relative to the brake disc (2).

5. A service disc brake according to claim 4, **characterized in that** the second adjustment means (24b) comprises a member (26b) for adjusting the position of the second piston (7) by adjusting the position of the third piston (9) relative to the closed space (10).

6. A service disc brake according to claim 5, **characterized in that** the adjustment member (24b) for adjusting the position of the third piston (9) is a screw mechanism.

7. A service disc brake according to claim 4, **characterized in that** the second adjustment means (24) comprises a fourth displaceable piston (25) which piston is connected to the second piston (7) and the third piston (9) via the closed space (10) containing the hydraulic fluid, and a member (26) for adjusting the position of the second piston (7) by adjusting the position of the fourth piston (25) relative to the closed space (10).

8. A service disc brake according to claim 7, **characterized in that** the adjustment member (26) for adjusting the position of the fourth piston (25) is a screw mechanism.

9. A service disc brake according to claim 2 and 4, **characterized in that** the first adjustment means (19) and the second adjustment means (24) are coupled to each other in order to automatically adjust the second axial clearance (25) at the same time as the first axial clearance (20) is adjusted or vice versa.

10. A service disc brake according to any preceding claim, **characterized in that** the braking actuator (12) comprises a pivotable lever (13) arranged between the first piston (6) and the third piston (9), the lever (13) having a first portion (14) for creating a force on the first piston (6) and a second portion (15) for creating a corresponding counterforce on the third piston (9) during pivot motion of the lever (13).

11. A vehicle provided with a service disc brake (1) according to any of claims 1-10.

12. A truck provided with a service disc brake according to any of claims 1-10.

13. A disc brake (1) comprising a brake disc (2), a first brake pad (4) and a second brake pad (5) arranged on opposite sides of the brake disc (2), and a first displaceable piston (6) and a second displaceable piston (7) which are arranged to act on the first brake pad (4) and the second brake pad (5), respectively, and an actuator (12) for braking the brake disc (2), wherein the disc brake comprises a third displaceable piston (9), the second piston (7) and the third piston (9) being connected to each other via a closed space (10) containing a hydraulic fluid, the braking actuator (12) being arranged to act on the first piston (6) and the third piston (9) for displacement of the first piston (6) towards the brake disc (2) and for displacement of the third piston (9) so as to displace the second piston (7) towards the brake disc (2) by means of the hydraulic fluid in the closed space (10), **characterized in that** the disc brake (1) comprises a first means (19) for adjusting a first axial clearance (20) between the brake disc (2) and the first pad (4) by adjusting the position of the first piston (6) relative to the brake disc (2), and a second means (24, 24b) for adjusting a second axial clearance (25) between the brake disc (2) and the second pad (5) by adjusting the position of the second piston (7) relative to the brake disc (2), and **in that** the first adjustment means (19) and the second adjustment means (24) are coupled to each other in order to automatically adjust the second axial clearance (25) at the same time as the first axial clearance (20) is adjusted or vice versa.

## Patentansprüche

1. Betriebsscheibenbremse (1) für ein Schwerfahrzeug mit einer Bremsscheibe (2), einem ersten Bremsbelag (4) und einem zweiten Bremsbelag (5), die auf entgegengesetzten Seiten der Bremsscheibe (2) angeordnet sind, und einem ersten verschiebbaren Kolben (6) und einem zweiten verschiebbaren Kolben (7), die so angeordnet sind, dass sie auf den ersten Bremsbelag (4) bzw. den zweiten Bremsbelag (5) wirken, und einem Stellglied (12) zum Bremsen der Bremsscheibe (2), **dadurch gekennzeichnet, dass** die Scheibenbremse einen dritten verschiebbaren Kolben (9) umfasst, wobei der zweite Kolben (7) und der dritte Kolben (9) miteinander über einen geschlossenen Raum (10) verbunden sind, der eine Hydraulikflüssigkeit enthält, wobei das Bremsstellglied (12) so angeordnet ist, dass es auf den ersten Kolben (6) wirkt, wobei eine Gegenkraft an dem dritten Kolben (9) für eine Verschiebung des ersten Kolbens (6) in Richtung der Bremsscheibe (2) und für eine Verschiebung des dritten Kolbens (9) in der entgegengesetzten Richtung erzeugt wird, um den zweiten Kolben (7) in Richtung der Bremsscheibe (2) mittels der Hydraulikflüssigkeit in dem geschlossenen Raum (10) zu verschieben.

2. Betriebsscheibenbremse nach Anspruch 1, **dadurch gekennzeichnet, dass** die Bremsscheibe (1) eine erste Einrichtung (19) zur Einstellung eines ersten axialen Spiels (20) zwischen der Bremsscheibe (2) und dem ersten Bremsbelag (4) durch Einstellung der Position des ersten Kolbens (6) bezüglich der Bremsscheibe (2) umfasst.

3. Betriebsscheibenbremse nach Anspruch 2, **dadurch gekennzeichnet, dass** die erste Einstelleinrichtung (19) einen Schraubenmechanismus (21) umfasst, der an dem ersten Kolben (6) angeordnet ist.

4. Betriebsscheibenbremse nach einem vorhergehenden Anspruch, **dadurch gekennzeichnet, dass** die Scheibenbremse (1) eine zweite Einrichtung (24, 24b) zur Einstellung eines zweiten axialen Spiels (25) zwischen der Bremsscheibe (2) und dem zweiten Belag (5) durch Einstellung der Position des zweiten Kolbens (7) bezüglich der Bremsscheibe (2) umfasst.

5. Betriebsscheibenbremse nach Anspruch 4, **dadurch gekennzeichnet, dass** die zweite Einstelleinrichtung (24b) ein Element (26b) zur Einstellung der Position des zweiten Kolbens (7) durch Einstellung der Position des dritten Kolbens (9) bezüglich des geschlossenen Raums (10) umfasst.

6. Betriebsscheibenbremse nach Anspruch 5, **dadurch gekennzeichnet, dass** das Einstellelement (24b) zur Einstellung der Position des dritten Kolbens (9) ein Schraubenmechanismus ist.

7. Betriebsscheibenbremse nach Anspruch 4, **dadurch gekennzeichnet, dass** die zweite Einstelleinrichtung (24) einen vierten verschiebbaren Kolben (25), wobei der Kolben mit dem zweiten Kolben (7) und dem dritten Kolben (9) über den geschlossenen Raum (10) verbunden ist, der die Hydraulikflüssigkeit enthält, und ein Element (26) zur Einstellung der Position des zweiten Kolbens (7) durch Einstellung der Position des vierten Kolbens (25) bezüglich des geschlossenen Raums (10) umfasst.

8. Betriebsscheibenbremse nach Anspruch 7, **dadurch gekennzeichnet, dass** das Einstellelement (26) zur Einstellung der Position des vierten Kolbens (25) ein Schraubenmechanismus ist.

9. Betriebsscheibenbremse nach Anspruch 2 und 4, **dadurch gekennzeichnet, dass** die erste Einstelleinrichtung (19) und die zweite Einstelleinrichtung (24) miteinander gekoppelt sind, um das zweite axiale Spiel (25) automatisch zur selben Zeit einzustellen, zu der das erste axiale Spiel (20) eingestellt wird, oder umgekehrt.

10. Betriebsscheibenbremse nach einem vorhergehenden Anspruch, **dadurch gekennzeichnet, dass** das Bremsstellglied (12) einen schwenkbaren Hebel (13) umfasst, der zwischen dem ersten Kolben (6) und dem dritten Kolben (9) angeordnet ist, wobei der Hebel (13) einen ersten Abschnitt (14) zur Erzeugung einer Kraft auf den ersten Kolben (6) und einen zweiten Abschnitt (15) zur Erzeugung einer entsprechenden Gegenkraft auf den dritten Kolben (9) während der Schwenkbewegung des Hebels (13) aufweist.

11. Fahrzeug, das mit einer Betriebsscheibenbremse (1) nach einem der Ansprüche 1 - 10 versehen ist.

12. Lastwagen, der mit einer Betriebsscheibenbremse nach einem der Ansprüche 1 - 10 versehen ist.

13. Scheibenbremse (1) mit einer Bremsscheibe (2), einem ersten Bremsbelag (4) und einem zweiten Bremsbelag (5), die an entgegengesetzten Seiten der Bremsscheibe (2) angeordnet sind, und einem ersten verschiebbaren Kolben (6) und einem zweiten verschiebbaren Kolben (7), die so angeordnet sind, dass sie auf den ersten Bremsbelag bzw. den zweiten Bremsbelag (5) wirken, und einem Stellglied (12) zum Bremsen der Bremsscheibe (2), wobei die Scheibenbremse einen dritten verschiebbaren Kolben (9) umfasst, wobei der zweite Kolben (7) und der dritte Kolben (9) miteinander über einen geschlossenen Raum (10) verbunden sind, der eine Hydraulikflüssigkeit enthält, das Bremsstellglied (12) so angeordnet ist, dass es auf den ersten Kolben (6) und den dritten Kolben (9) für eine Verschiebung des ersten Kolbens (6) in Richtung der Bremsscheibe (2) und für eine Verschiebung des dritten Kolbens (9) wirkt, um den zweiten Kolben (7) in Richtung der Bremsscheibe (2) mittels der Hydraulikflüssigkeit in dem geschlossenen Raum (10) zu verschieben, **dadurch gekennzeichnet, dass** die Scheibenbremse (1) eine erste Einrichtung (19) zur Einstellung eines ersten axialen Spiels (20) zwischen der Bremsscheibe (2) und dem ersten Belag (4) durch Einstellung der Position des ersten Kolbens (6) bezüglich der Bremsscheibe (2) und eine zweite Einrichtung (24, 24b) zur Einstellung eines zweiten axialen Spiels (25) zwischen der Bremsscheibe (2) und dem zweiten Belag (5) durch Einstellung der Position des zweiten Kolbens (7) bezüglich der Bremsscheibe (2) umfasst, und dass die erste Einstelleinrichtung (19) und die zweite Einstelleinrichtung (24) miteinander gekoppelt sind, um das zweite axiale Spiel (25) automatisch zur gleichen Zeit einzustellen, zu der das erste axiale Spiel (20) eingestellt wird, oder umgekehrt.

## Revendications

1. Frein à disque de service (1) destiné à un véhicule poids lourd, comprenant un disque de frein (2), une première plaquette de frein (4) et une seconde plaquette de frein (5) agencées sur des côtés opposés du disque de frein (2), et un premier piston déplaçable (6) et un deuxième piston déplaçable (7) qui sont agencés pour agir sur la première plaquette de frein (4) et la seconde plaquette de frein (5), respectivement, et un actionneur (12) pour freiner le disque de frein (2), **caractérisé en ce que** le frein à disque comprend un troisième piston déplaçable (9), le deuxième piston (7) et le troisième piston (9) étant reliés l'un à l'autre via un espace fermé (10) contenant un fluide hydraulique, l'actionneur de freinage (12) étant agencé pour agir sur le premier piston (6) de telle sorte qu'une force antagoniste est créée sur le troisième piston (9) pour le déplacement du premier piston (6) vers le frein à disque (2), et pour le déplacement du troisième piston (9) dans la direction opposée, de manière à déplacer le deuxième piston (7) vers le disque de frein (2), au moyen du fluide hydraulique contenu dans l'espace fermé (10).

2. Frein à disque du service selon la revendication 1, **caractérisé en ce que** le frein à disque (1) comprend des premiers moyens (19) pour ajuster un premier jeu axial (20) entre le disque de frein (2) et la première plaquette (4), en ajustant la position du premier piston (6) par rapport au disque de frein (2).

3. Frein à disque de service selon la revendication 2, **caractérisé en ce que** les premiers moyens d'ajustement (19) comprennent un mécanisme à vis (21) agencé sur le premier piston (6).

4. Frein à disque de service selon l'une quelconque des revendications précédentes, **caractérisé en ce que** le frein à disque (1) comprend des seconds moyens (24, 24b) pour ajuster un second jeu axial (25) entre le disque de frein (2) et la seconde plaquette (5), en ajustant la position du deuxième piston (7) par rapport au disque de frein (2).

5. Frein à disque de service selon la revendication 4, **caractérisé en ce que** les seconds moyens d'ajustement (24b) comprennent un élément (26b) pour ajuster la position du deuxième piston (7) en ajustant la position du troisième piston (9) par rapport à l'espace fermé (10).

6. Frein à disque de service selon la revendication 5, **caractérisé en ce que** l'élément d'ajustement (24b) pour ajuster la position du troisième piston (9) est un mécanisme à vis.

7. Frein à disque de service selon la revendication 4, **caractérisé en ce que** les seconds moyens d'ajustement (24) comprennent un quatrième piston déplaçable (25), lequel piston est relié au deuxième piston (7) et au troisième piston (9) via l'espace fermé (10) contenant le fluide hydraulique, et un élément (26) pour ajuster la position du deuxième piston (7) en ajustant la position de quatrième piston (25) par rapport à l'espace fermé (10).

8. Frein à disque de service selon la revendication 7, **caractérisé en ce que** l'élément d'ajustement (26) pour ajuster la position du quatrième piston (25) est un mécanisme à vis.

9. Frein à disque de service selon la revendication 2 et la revendication 4, **caractérisé en ce que** les premiers moyens d'ajustement (19) et les seconds moyens d'ajustement (104) sont couplés les uns aux autres pour ajuster automatiquement le second jeu axial (25) en même temps que le premier jeu axial (20) est ajusté, ou vice versa.

10. Frein à disque de service selon l'une quelconque des revendications précédentes, **caractérisé en ce que** l'actionneur de freinage (12) comprend un levier pivotant (13) agencé entre le premier piston (6) et le troisième piston (9), le levier (13) ayant une première partie (14) pour créer une force sur le premier piston (6), et une seconde partie (15) pour créer une force antagoniste correspondante sur le troisième piston (9) pendant un mouvement de pivotement du levier (13).

11. Véhicule muni d'un frein à disque de service (1) selon l'une quelconque des revendications 1 à 10.

12. Camion muni d'un frein à disque de service selon l'une quelconque des revendications 1 à 10.

13. Frein à disque (1) comprenant un disque de frein (2), une première plaquette de frein (4) et une second plaquette de frein (5) agencées sur des côtés opposés du disque de frein (2), et un premier piston déplaçable (6) et un deuxième piston déplaçable (7) qui sont agencés pour agir sur la première plaquette de frein (4) et la seconde plaquette de frein (5), respectivement, et un actionneur (12) pour freiner le disque de frein (2), dans lequel le frein à disque comprend un troisième piston déplaçable (9), le deuxième piston (7) et le troisième piston (9) étant reliés l'un à l'autre via un espace fermé (10) comprenant un fluide hydraulique, l'actionneur de freinage (12) étant agencé pour agir sur le premier piston (6) et le troisième piston (9) pour un déplacement du premier piston (6) vers le disque de frein (2), et pour un déplacement du troisième piston (9) de manière à déplacer le deuxième piston (7) vers le disque de frein (2) au moyen du fluide hydraulique contenu dans l'espace fermé (10), **caractérisé en ce que** le frein à disque (1) comprend des premiers moyens (19) pour ajuster un premier jeu axial (20) entre le disque de frein (2) et la première plaquette (4) en ajustant la position du premier piston (6) par rapport au disque de frein (2), et des seconds moyens (24, 24b) pour ajuster un second jeu axial (25) entre le disque de frein (2) et la seconde plaquette (5) en ajustant la position du second piston (7) par rapport au disque de frein (2), et **en ce que** les premiers moyens d'ajustement (19) et les seconds moyens d'ajustement (24) sont couplés les uns aux autres pour ajuster automatiquement le second jeu axial (25) en même temps que le premier jeu axial (20) est ajusté, ou vice versa.
